(19) **Europäisches Patentamt European Patent Office Office européen des brevets**

(11) **EP 4 140 566 A1**

(12) **EUROPEAN PATENT APPLICATION**

(43) Date of publication:
**01.03.2023  Bulletin 2023/09**

(21) Application number: **21194125.7**

(22) Date of filing: **31.08.2021**

(51) International Patent Classification (IPC):
**B01D 53/58** (2006.01)   **C02F 1/20** (2006.01)
**C02F 101/16** (2006.01)   **C02F 103/30** (2006.01)
**C02F 11/04** (2006.01)

(52) Cooperative Patent Classification (CPC):
**C02F 1/20; B01D 53/00; B01D 53/62;** C02F 11/04;
C02F 2101/16; C02F 2103/30; C02F 2301/04

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Sulzer Management AG
8401 Winterthur (CH)**

(72) Inventors:
• RAISER, Thomas
  **68680 Kembs (FR)**

• LUCKE, Martin
  **8400 Winterthur (CH)**
• MAZZOTTI, Marco
  **8044 Zürich (CH)**
• PÉREZ CALVO, José Francisco
  **8050 Zürich (CH)**
• OTGONBAYAR, Tuvshinjargal
  **8600 Dübendorf (CH)**
• NEGRI, Valentina
  **8049 Zürich (CH)**

(74) Representative: **Henkel & Partner mbB
Patentanwaltskanzlei, Rechtsanwaltskanzlei
Maximiliansplatz 21
80333 München (DE)**

(54) **A PLANT AND PROCESS FOR SEPARATING AN AMMONIA AND CARBON DIOXIDE CONTAINING WASTEWATER STREAM TO A CONCENTRATED AQUEOUS AMMONIA SOLUTION AND A PURIFIED WASTEWATER STREAM**

(57)    A process of treating an ammonia and carbon dioxide containing wastewater stream so as to produce a concentrated aqueous ammonia solution containing at least 5% by weight of dissolved ammonia and at most 20% by weight of dissolved carbon dioxide and a purified wastewater stream containing at most 1.000 ppm dissolved ammonia, wherein the process comprises the following steps:
a) feeding the wastewater stream into a carbon dioxide degasser column comprising at least one bed of one or more random packings, at least one bed of one or more structured packings or at least one tray, wherein a first portion of the wastewater stream is fed at a position above at least one bed of one or more random packings, at least one bed of one or more structured packings or at least one tray and a second portion of the wastewater stream optionally in admixture with a portion of a liquid carbon dioxide depleted stream being withdrawn as bottom fraction from the carbon dioxide degasser column having a higher temperature than the first portion is fed at a position below at least one bed of one or more random packings, at least one bed of one or more structured packings or at least one tray the carbon dioxide degasser column, wherein the mass flow ratio of the first portion of the wastewater stream to the total wastewater stream fed into the carbon dioxide degasser column is 0.01 to 0.6,
b) withdrawing a gaseous carbon dioxide rich stream containing less than 10% by weight of the ammonia contained in the wastewater stream as overhead fraction and the liquid carbon dioxide depleted stream as bottom fraction from the carbon dioxide degasser column,
c) feeding the liquid carbon dioxide depleted stream into an ammonia stripper column,
d) withdrawing a gaseous ammonia rich stream as overhead fraction and the purified wastewater stream containing at most 1.000 ppm dissolved ammonia as bottom fraction from the ammonia stripper column,
e) feeding the gaseous ammonia rich stream and separately therefrom water into a quencher column and withdrawing concentrated aqueous ammonia solution containing at least 5% by weight of dissolved ammonia and at most 20% by weight of dissolved carbon dioxide as bottom fraction from the quencher column.

EP 4 140 566 A1

**Fig. 1**

**Description**

The present invention relates to a process and to a plant of treating an ammonia and carbon dioxide containing wastewater stream so as to produce a concentrated aqueous ammonia solution containing at least 5% by weight of dissolved ammonia and at most 20% by weight of dissolved carbon dioxide and a purified wastewater stream containing at most 1.000 ppm dissolved ammonia, wherein the process comprises the following steps.

Ammonia and carbon dioxide containing wastewater streams are generated during a plurality of industrial process, such as during the production of biogas, for instance by anaerobic digestion of agricultural and municipal waste. Such processes gain more and more importance, since biogas is obtainable as valuable product and simultaneously agricultural and municipal waste is reduced at least partially. From anaerobic digestion, large volumes of wastewater are generated containing both, ammonia and carbon dioxide. An example for such a wastewater including ammonia and carbon dioxide is filtered fermentation broth or anaerobically digested cattle manure effluent. These wastewaters need to be appropriately treated, which is, however, challenging, since the respective known processes are energy intensive and require expensive plants. Moreover, the valuable ammonia is not recovered.

For example, it is common practice to treat such wastewater streams by stripping in one step with dosage of caustic. It is desired that in the initial carbon dioxide stripping step the lowest amount possible of the ammonia contained in the wastewater stream is lost, i.e. removed from it together with the carbon dioxide. In addition, enough carbon dioxide must be removed in the initial carbon dioxide stripping step in order to reliably avoid precipitation of salts during the later treatment steps, such as the precipitation of ammonium carbonate. In addition, it is desired that the obtained purified water contains as low concentration as possible of ammonia. The known processes for treating an ammonia and carbon dioxide containing wastewater stream so as to produce a concentrated aqueous ammonia solution and a purified wastewater stream reliably avoiding a salt precipitation during the process and in the produced concentrated aqueous ammonia solution during usual storage temperature have the drawback of being very energy intensive and of requiring complex plants.

In view of this, the object underlying the present invention is to provide a plant and a process for treating an ammonia and carbon dioxide containing wastewater stream so as to produce a concentrated aqueous ammonia solution and a purified wastewater stream, which reliably avoids a salt precipitation during the process and in the produced concentrated aqueous ammonia solution at usual storage temperature, and which is in particular very energy and capital efficient, i.e. which requires a plant of low complexity and which is characterized by a low operational energy demand.

In accordance with the present invention this object is satisfied by providing a process of treating an ammonia and carbon dioxide containing wastewater stream so as to produce a concentrated aqueous ammonia solution containing at least 5% by weight of dissolved ammonia and at most 20% by weight of dissolved carbon dioxide and a purified wastewater stream containing at most 1.000 ppm dissolved ammonia, wherein the process comprises the following steps:

a) feeding the wastewater stream into a carbon dioxide degasser column comprising at least one bed of one or more random packings, at least one bed of one or more structured packings or at least one tray, wherein i) a first portion of the wastewater stream is fed at a position above at least one bed of one or more random packings, above at least one bed of one or more structured packings or above at least one tray and ii) a second portion of the wastewater stream having a higher temperature than the first portion and/or a mixture of a second portion of the wastewater stream with a portion of a liquid carbon dioxide depleted stream being withdrawn as bottom fraction from the carbon dioxide degasser column having a higher temperature than the first portion is fed at a position below at least one bed of one or more random packings, below at least one bed of one or more structured packings or below at least one tray into the carbon dioxide degasser column, wherein the bed of one or more random packings, the bed of one or more structured packings or the trays above which the first portion of the wastewater stream is fed is the same as or located above the bed of one or more random packings, the bed of one or more structured packings or the tray below which the second portion of the wastewater stream and/or the mixture of a second portion of the wastewater stream with a portion of a liquid carbon dioxide depleted stream is fed, wherein the mass flow ratio of the first portion of the wastewater stream to the total wastewater stream fed into the carbon dioxide degasser column is 0.01 to 0.6,

b) withdrawing a gaseous carbon dioxide rich stream containing less than 10% by weight of the ammonia contained in the wastewater stream as overhead fraction and the liquid carbon dioxide depleted stream as bottom fraction from the carbon dioxide degasser column,

c) feeding the liquid carbon dioxide depleted stream into an ammonia stripper column,

d) withdrawing a gaseous ammonia rich stream as overhead fraction and the purified wastewater stream containing at most 1.000 ppm dissolved ammonia as bottom fraction from the ammonia stripper column, wherein at least a portion of the liquid purified wastewater stream withdrawn from the ammonia stripper column is evaporated, from which all or a portion is fed back into the ammonia stripper column,

e) feeding the gaseous ammonia rich stream and separately therefrom water into a quencher column, withdrawing a gaseous vent gas stream as overhead fraction and withdrawing concentrated aqueous ammonia solution containing at least 5% by weight of dissolved ammonia and at most 20% by weight of dissolved carbon dioxide as bottom fraction from the quencher column.

This solution bases on the surprising finding that performing before the carbon dioxide removal from the ammonia and carbon dioxide containing wastewater feed stream a feed split into a first portion of feed being fed into the carbon dioxide degasser column at a position being above at least one bed of one or more random packings, at least one bed of one or more structured packings or at least one tray and into a second portion of feed (optionally admixed with a portion of a liquid carbon dioxide depleted stream being withdrawn as bottom fraction from the carbon dioxide degasser column) having a higher temperature than the first portion of feed being fed into the carbon dioxide degasser column at a position being below at least one bed of one or more random packings, at least one bed of one or more structured packings or at least one tray into the carbon dioxide degasser column and being separated from the position, at which the first portion of feed is introduced into the carbon dioxide degasser column by at least one bed of one or more random packings, at least one bed of one or more structured packings or at least one tray, wherein the mass flow ratio of the first portion of the wastewater stream to the total wastewater stream fed into the carbon dioxide degasser column is 0.01 to 0.6, allows to separate in a carbon dioxide degasser column a required amount of carbon dioxide with a significantly lower energy demand than the ammonia stripper and with minimal ammonia loss of less than 1 %. The present invention bases furthermore on the finding that it is not required to remove all or essentially all of the carbon dioxide during step a), which would be associated with a high loss of ammonia, but that it is only necessary to remove a minimum amount of carbon dioxide, which is sufficient to avoid a salt precipitation during the further process steps and in the concentrated aqueous ammonia solution at the desired storage temperature. In other words, the present invention allows to remove in step a) comparable low amounts of carbon dioxide further decreasing the operational costs of the process in comparison to a complete removal of carbon dioxide. In particular, this is achieved without any need of using inert gas during the carbon dioxide stripping step and/or ammonia stripping step, which would be connected with a complex plant and increased operational costs, and also without any need of recycling large volumes of process streams from downstream steps to upstream steps, as required in most of the prior art processes. The process in accordance with the present invention allows to efficiently remove ammonia from the ammonia and carbon dioxide containing wastewater stream without need to adjust any base before or during the ammonia stripping step d), thus avoiding a complex pH value control as well as handling and dosage of caustic. As described in further detail below, the present invention further allows to efficiently use heat of process streams generated during the process by heat integration. All in all, the present invention provides a plant and a process for treating an ammonia and carbon dioxide containing wastewater stream so as to produce a concentrated aqueous ammonia solution and a purified wastewater stream, which reliably avoids a salt precipitation during the process and in the produced concentrated aqueous ammonia solution during usual storage temperature, and which is in particular very energy and capital efficient, i.e. which requires a quite uncomplex plant and which is characterized by a low operational energy demand. Even if the present invention allows to remove in step a) comparable low amounts of carbon dioxide, the present invention also allows to remove all of the carbon dioxide contained in the wastewater stream and to produce a very pure ammonium hydroxide solution..

The term "dissolved" comprises in accordance with the present invention a physical dissolution of a compound as well as a chemical dissolution of a compound. Thus, the term ammonia being dissolved in aqueous ammonia solution comprises ammonia molecules being physically dissolved in water as well as ammonium ions and hydroxide ions resulting from the chemical dissolution of ammonia in water. Likewise, the term carbon dioxide being dissolved in aqueous ammonia solution comprises carbon dioxide molecules being physically dissolved in water as well as aqueous carbonic acid, i.e. a mixture of carbonate ions, bicarbonate ions, carbamate ions, ammonium ions and hydronium ions resulting from the chemical dissolution of carbon dioxide in water.

As set out above, the present patent application allows to remove only a minimum of the carbon dioxide from the concentrated aqueous ammonia solution, thus minimizing the energy required for the process and minimizing the required separation equipment for the plant. Thus, the concentrated aqueous ammonia solution may comprise carbon dioxide to a certain extent. However, it is preferred that the carbon dioxide content of the concentrated aqueous ammonia solution is limited so that the produced concentrated aqueous ammonia solution does not form any precipitate and in particular no ammonium carbonate precipitate, when stored for at least 1 day at a temperature of 10°C.

According to a further particular preferred embodiment of the present invention, in step e) no inert gas is fed in addition to the gaseous ammonia rich stream and the water into the quencher column. Even more preferably, in the whole process no inert gas is fed into any of the columns, i.e. the carbon dioxide degasser column, the ammonia stripper column and the quencher column. This further reduces the required plant investment costs as well as the operational costs. Inert gas means in this context any gas which does not react with ammonia, such as for instance nitrogen, argon, helium, oxygen, air or coke oven gas.

In a further development of the idea of the present invention, it is suggested that no base and/or no acid is added to the wastewater stream or feed, respectively, before or during it is fed into the carbon dioxide degasser column, to the mixture contained in the carbon dioxide degasser column, to the liquid carbon dioxide depleted stream before or during it is fed into the ammonia stripper column or to the mixture contained in the ammonia stripper column. More preferably, in the whole process no base and/or no acid is added to any of the process streams. It is a further surprising finding of the present invention that - contrary to the ammonia stripping processes described in the prior art - an adjustment of the pH value of the liquid stream entering the ammonia stripper column and of the mixture contained in the ammonia stripper column is not necessary. This does not only facilitate the process, but further reduces the operational costs.

Furthermore, it is preferred that the purified wastewater stream withdrawn in step d) of the process in accordance with the present invention from the ammonia stripper column is neither completely nor partially recycled to the carbon dioxide degasser column used in step a).

In addition, it is preferred that in step a) no further stream is fed to the carbon dioxide degasser column in addition to i) the first portion of the wastewater stream and ii) the second portion of the wastewater stream and/or mixture of a second portion of the wastewater stream with a portion of a liquid carbon dioxide depleted stream being withdrawn as bottom fraction from the carbon dioxide degasser.

The present invention is not particularly limited concerning the kind of ammonia and carbon dioxide containing wastewater stream. For example, the wastewater stream may be filtered or centrifuged fermentation broth, an anaerobically digested cattle manure effluent or any effluent from a fermenter or from the production of biogas by anaerobic digestion of agricultural or municipal waste. Good results are in particular obtained, when the wastewater stream fed into step a) comprises more than 0.05 to 0.65% by weight of dissolved ammonia, 0.10 to 0.79% by weight of dissolved carbon dioxide and 0 to 1% by weight of organic solids. For instance, the content of organic solids may be more than 0 to 1% by weight, such as 0.10 to 1.00% by weight, 0.20 to 1.00% by weight or 0.50 to 1.00% by weight. The organic solids may be sugar, protein, cell debris, decomposition molecules, biomass or the like. Further optional components of the wastewater may be methanol, ethanol, ethylacetate, acetic acid and salts being different from ammonia or carbonate salts.

In accordance with the present invention, i) a first portion of the wastewater stream is fed at a position above at least one bed of one or more random packings, above at least one bed of one or more structured packings or above at least one tray and ii) a second portion of the wastewater stream having a higher temperature than the first portion and/or a mixture of a second portion of the wastewater stream with a portion of a liquid carbon dioxide depleted stream being withdrawn as bottom fraction from the carbon dioxide degasser column having a higher temperature than the first portion is fed at a position below at least one bed of one or more random packings, below at least one bed of one or more structured packings or below at least one tray into the carbon dioxide degasser column, wherein the bed of one or more random packings, the bed of one or more structured packings or the tray above which the first portion of the wastewater stream is fed is the same as or located above the bed of one or more random packings, the bed of one or more structured packings or the tray below which the second portion of the wastewater stream and/or the mixture of a second portion of the wastewater stream with a portion of a liquid carbon dioxide depleted stream is fed. This means that the position at which the first portion of the wastewater stream is fed and the position at which the second portion of the wastewater stream is fed into the carbon dioxide degasser column are separated by at least on bed of one or more random packings, bed of one or more structured packings or tray. For instance, if the carbon dioxide degasser column comprises five beds of one or more random packings, five beds of one or more structured packings or five trays, the first portion of the wastewater stream may be fed into the carbon dioxide degasser column above any of the first to fourth beds of one or more random packings, first to fourth beds of one or more structured packings or first to fourth trays seen from the top to the bottom of the carbon dioxide degasser column, whereas the second portion of the wastewater stream may be fed at a position being at least one bed of one or more random packings, at least one bed of one or more structured packings or at least one tray below that of the first portion of the wastewater stream.

The present invention is not particularly restricted concerning the number of beds comprising one or more random packings, the number of beds comprising one or more structured packings or the number of trays included in the carbon dioxide degasser column. For instance, the carbon dioxide degasser column may comprise one bed of one or more random packings, one bed of one or more structured packings or one tray, wherein the first portion of the wastewater stream is fed above and the second portion of the wastewater stream and/or mixture of the second portion of the wastewater stream with a portion of a liquid carbon dioxide depleted stream is fed below the bed of one or more random packings, below the bed of one or more structured packings or below the tray into the carbon dioxide degasser column. Suitable examples for structured packings are cross-channel structured packings.

In accordance with an alternative embodiment of the present invention, the carbon dioxide degasser column comprises two beds of one or more random packings, two beds of one or more structured packings or two trays on top of each other, wherein the first portion of the wastewater stream is fed at a position above the uppermost and the second portion of the wastewater stream is fed at a position below the lowermost bed of one or more random packings, below the lowermost bed of one or more structured packings or below the lowermost tray into the carbon dioxide degasser column.

In order to further reduce the operational costs of the process of the present invention, it is suggested in a further development of the idea of the present invention that the second portion of the wastewater stream and/or the mixture of the second portion of the wastewater stream with a portion of a liquid carbon dioxide depleted stream being withdrawn as bottom fraction from the carbon dioxide degasser column is heated, before being introduced into the carbon dioxide degasser column. As heating medium, one or more of a water rich condensate stream obtained from the gaseous ammonia rich stream withdrawn in step d) by partial condensation, of the purified wastewater stream withdrawn in step d) and of the liquid carbon dioxide depleted stream or a portion of the liquid carbon dioxide depleted stream withdrawn in step b) may be used in the heat exchanger(s). If necessary, external heating medium may be used in addition to or instead of the aforementioned internal process streams. The external heating medium may be for instance steam, hot oil or compressed hot water. For example, i) the second portion of the wastewater stream may be heated in a heat exchanger, before being fed into the carbon dioxide degasser column, wherein a water rich condensate stream obtained from the gaseous ammonia rich stream withdrawn in step d) by partial condensation is used in the heat exchanger as heating medium, and/or ii) the second portion of the wastewater stream may be heated in a heat exchanger, before being fed into the carbon dioxide degasser column, wherein the purified wastewater stream withdrawn in step d) is used in the heat exchanger as heating medium, and/or iii) the second portion of the wastewater stream may be heated in a heat exchanger, before being fed into the carbon dioxide degasser column, wherein the liquid carbon dioxide depleted stream or a portion of the liquid carbon dioxide depleted stream withdrawn in step b) is used in the heat exchanger as heating medium. The heat exchanger(s) may be for instance shell tube heat exchangers or plate and frame heat exchangers.

In accordance with a particular preferred embodiment of the present invention, i) the second portion of the wastewater stream is heated in a (first) heat exchanger, before being fed into the carbon dioxide degasser column, wherein a water rich condensate stream obtained from the gaseous ammonia rich stream withdrawn in step d) by partial condensation is used in the (first) heat exchanger as heating medium, and thereafter ii) the second portion of the wastewater stream is heated in a (second) heat exchanger, before being fed into the carbon dioxide degasser column, wherein the purified wastewater stream withdrawn in step d) is used in the (second) heat exchanger as heating medium. Good results are in particular obtained, when in this embodiment downstream of the (second) heat exchanger iii) the second portion of the wastewater stream and/or a mixture of the second portion of the wastewater stream with a portion of the liquid carbon dioxide depleted stream being withdrawn as bottom fraction from the carbon dioxide degasser column is heated in a (third) heat exchanger, before being fed into the carbon dioxide degasser column, wherein the liquid carbon dioxide depleted stream or a portion of the liquid carbon dioxide depleted stream withdrawn in step b) is used in the heat exchanger as heating medium. Again, the heat exchanger(s) may be for instance shell tube heat exchangers or plate and frame heat exchangers.

In particular, if more than the internal energy is necessary to heat/evaporate the second portion of the wastewater stream, the second portion of the wastewater stream or a mixture of the second portion of the wastewater stream with a portion of a liquid carbon dioxide depleted stream being withdrawn as bottom fraction from the carbon dioxide degasser column may be heated/evaporated, after optionally having been heated in one or more heat exchangers, such as the aforementioned heat exchangers, in an evaporator with an external heating medium, before the heated/evaporated second portion of the wastewater stream or mixture of the second portion of the wastewater stream with a portion of a liquid carbon dioxide depleted stream being withdrawn as bottom fraction from the carbon dioxide degasser column is fed into the carbon dioxide degasser column. The incorporation of an evaporated stream of the second portion of the wastewater stream or of a mixture of the second portion of the wastewater stream and with a portion of a liquid carbon dioxide depleted stream into the carbon dioxide degasser column has the advantage that the vapor fraction of this stream does not mix with the liquid and thus does not dilute the (liquid) bottom fraction of the carbon dioxide degasser column, but rises as vapor in the carbon dioxide degasser column upwards.

As an alternative, instead of evaporating the second portion of the wastewater stream and/or the mixture of the second portion of the wastewater stream with a portion of a liquid carbon dioxide depleted stream being withdrawn as bottom fraction from the carbon dioxide degasser column in a heat exchanger, this stream can be supplied as liquid to the sump of the carbon dioxide degasser column and additionally, low pressure stripping steam is supplied to the sump of the same column.

As set out above, the second portion of the wastewater stream may be fed directly, i.e. without addition of any substance, into the carbon dioxide degasser column.

As set out above, however, in a further development of the idea of the present invention it is suggested that a portion of the liquid carbon dioxide depleted stream being withdrawn as bottom fraction from the carbon dioxide degasser column is mixed with the second portion of the wastewater stream, before the so obtained mixture is fed into the carbon dioxide degasser column. Thereby, due to the additional heat of the admixed liquid carbon dioxide depleted stream being withdrawn as bottom fraction from the carbon dioxide degasser column, the second portion of the wastewater stream is efficiently heated/evaporated, before being introduced into the liquid carbon dioxide depleted stream.

Good results are in particular obtained, when the first portion of the wastewater stream being fed into the carbon dioxide degasser column has a temperature of 10 to 50°C and preferably of 30 to 40°C, whereas preferably the second portion of the wastewater stream being fed into the carbon dioxide degasser column has a temperature of 70 to 160°C and more preferably of 100 to 130°C at the inlet of the carbon dioxide degasser column.

As set out above, the mass flow ratio of the first portion of the wastewater stream to the total wastewater stream fed into the carbon dioxide degasser column is 0.01 to 0.6. The sum of the first portion of the wastewater stream and of the second portion of the wastewater stream is the total wastewater stream. For instance, the mass flow ratio of the first portion of the wastewater stream to the total wastewater stream fed into the carbon dioxide degasser column is 0.1 to 0.6, such as 0.2 to 0.5.

Good results are in particular obtained, when the pressure within the carbon dioxide degasser column during step a) is from 0.1 to 0.25 MPa. It has been found in the present invention that the ammonia loss is minimized in step a), if the pressure in the carbon dioxide degasser column is above atmospheric pressure.

The carbon dioxide depletion ratio obtained in the carbon dioxide degasser column during step a), i.e. the ratio of the carbon dioxide amount removed with the gaseous carbon dioxide rich stream in step a) divided by the carbon dioxide amount contained in the ammonia and carbon dioxide containing wastewater stream, is preferably adjusted to be at least 20%, more preferably at least 50% and most preferably at least 70%. Moreover, it is preferred that the ammonia loss in the carbon dioxide degasser column during step a), i.e. the ratio of the ammonia amount removed with the gaseous carbon dioxide rich stream in step a) divided by the ammonia amount contained in the ammonia and carbon dioxide containing wastewater stream, is preferably adjusted to be at most 5% and most preferably at least 1%.

Preferably, the gaseous carbon dioxide rich stream being withdrawing in step b) contains less than 5% by weight, more preferably less than 1% by weight and most preferably less than 0.1% by weight of the ammonia contained in the wastewater stream.

The liquid carbon dioxide depleted stream being withdrawn in step b) preferably contains less than 0.5% by weight of dissolved carbon dioxide and 0 to 2% by weight of dissolved ammonia and has a temperature of 100 to 130°C. It has been found in the present invention that the sump temperature of the carbon dioxide degasser column should not exceed 150°C.

In accordance with a further preferred embodiment of the present invention, during step c) the pressure is adjusted within the ammonia stripper column to be 0.09 to 0.13 MPa and the temperature is adjusted within the ammonia stripper column to be 90 to 120°C.

In accordance with a further preferred embodiment of the present invention, the operational parameters in the carbon dioxide degasser column in step a) may be optimized by the following statistical model. The statistical model allows to calculate the optimal value of the operation parameters column pressure and feed split ratio related to the $CO_2$-degasser column. The statistical model is in particular reliable for an ammonia and carbon dioxide containing wastewater stream fed into step a) comprising more than 0.05 to 0.65% by weight of dissolved ammonia and 0.10 to 0.79% by weight of dissolved carbon dioxide, wherein the intended storage temperature of the obtained concentrated aqueous ammonia solution is 5 to 30°C, wherein during the storage no precipitate shall form in the concentrated aqueous ammonia solution.

To select the optimal process configuration, decision variables are defined, wherein the decision variables are defined as follows:

$$f_{b,A}(c_{CO_2}, c_{NH_3}, T_S) = T_S - \sum_{i=0}^{3} \sum_{j=0}^{2} p_{ij} c_{CO_2}^i c_{NH_3}^j$$

(equation 1)

wherein the parameters $p_{ij}$, $q_{jk}$ and $r_k$ are given in the following tables:

| i | j | $p_{ij}$ |
|---|---|---|
| 0 | 0 | —24.43 |
| 0 | 1 | 153.5 |
| 0 | 2 | —508.8 |
| 1 | 0 | 910.3 |
| 1 | 1 | —3.533 × 10³ |
| 1 | 2 | 9.181 × 10³ |

(continued)

| i | j | $p_{ij}$ |
|---|---|---|
| 2 | 0 | $-5.133 \times 10^3$ |
| 2 | 1 | $8.024 \times 10^3$ |
| 2 | 2 | $-2.596 \times 10^4$ |
| 3 | 0 | $1.367 \times 10^4$ |
| 3 | 1 | 0 |
| 3 | 2 | 0 |

| j | k | $q_{jk}$ |
|---|---|---|
| 0 | 0 | $-0.06863$ |
| 0 | 1 | $6.036 \times 10^{-3}$ |
| 0 | 2 | $-1.095 \times 10^{-4}$ |
| 1 | 0 | $0.2429$ |
| 1 | 1 | $6.044 \times 10^{-3}$ |
| 1 | 2 | 0 |

| k | $r_k$ |
|---|---|
| 0 | -0.05166 |
| 1 | 0.05911 |
| 2 | $-4.088 \times 10^{-3}$ |
| 3 | $1.373 \times 10^{-4}$ |
| 4 | $-1.686 \times 10^{-6}$ |

and wherein the variables are defined as follows:

$f_{bA}$ — decision variable A,
$T_S$ - storage temperature (of final product),
$c_{CO2}$ - carbon dioxide concentration in feed,
$c_{NH3}$ - ammonia concentration in feed,
i,j,k - summation indices also used as exponent.

The decision for the optimal process configuration is based on the calculation results.

If $f_{bA} \leq 0$, then the optimal process comprises three of the aforementioned heat exchange steps i) to iii), i.e. i) the second portion of the wastewater stream is heated in a heat exchanger, before being fed into the carbon dioxide degasser column, wherein a water rich condensate stream obtained from the gaseous ammonia rich stream withdrawn in step d) by partial condensation is used in the (first) heat exchanger as heating medium, ii) the second portion of the wastewater stream is heated in a heat exchanger, before being fed into the carbon dioxide degasser column, wherein the purified wastewater stream withdrawn in step d) is used in the heat exchanger as heating medium and iii) the second portion of the wastewater stream and/or a mixture of the second portion of the wastewater stream with a portion of the liquid carbon dioxide depleted stream being withdrawn as bottom fraction from the carbon dioxide degasser column is heated in a heat exchanger, before being fed into the carbon dioxide degasser column, wherein the liquid carbon dioxide depleted stream or a portion of the liquid carbon dioxide depleted stream withdrawn in step b) is used in the heat exchanger as heating medium. In this case, the feed split ratio and the column pressure have to be calculated with the below equations 2 and 3.

If $f_{bA} > 0$, then the optimal process comprises two of the aforementioned heat exchange steps i) to iii). In this case, the feed split ratio has to be calculated with the below equation 2 and the column pressure is 101,000 Pa.

The optimal feed split ratio and the optimal column pressure are calculated according to the following equations 2 and 3:

$$f_f\left(c_{CO_2}, c_{NH_3}, T_S\right) = \sum_{i=0}^{2} \sum_{j=0}^{2} \sum_{k=0}^{3} a_{ijk} c_{CO_2}^i c_{NH_3}^j T_S^k$$

(equation 2)

$$f_P\left(c_{CO_2}, c_{NH_3}, T_S\right) = \sum_{i=0}^{2} \sum_{j=0}^{2} \sum_{k=0}^{3} b_{ijk} c_{CO_2}^i c_{NH_3}^j T_S^k$$

(equation 3),

wherein $f_{cs} = f_f$ and $p_{Col} = f_P$ ark the model parameters $a_{ijk}$ and $b_{ijk}$ are given in the following table:

| i | j | k | $a_{ijk}$ | $b_{ijk}$ |
|---|---|---|---|---|
| 0 | 0 | 0 | 0.1216 | 2.960 |
| 0 | 0 | 1 | -0.01730 | 0.02860 |
| 0 | 0 | 2 | 0 | 0 |
| 0 | 0 | 3 | $1.668 \times 10^{-5}$ | $9.670 \times 10^{-6}$ |
| 0 | 1 | 0 | —1.389 | —4.316 |
| 0 | 1 | 1 | 0.1150 | —1.374 |
| 0 | 1 | 2 | 0 | 0 |
| 0 | 1 | 3 | $—1.215 \times 10^{-4}$ | $—1.346 \times 10^{-3}$ |
| 0 | 2 | 0 | 2.457 | 0.3043 |
| 0 | 2 | 1 | —0.1506 | 0 |
| 0 | 2 | 2 | 0 | 0.4803 |
| 0 | 2 | 3 | 0 | 0 |
| 1 | 0 | 0 | 5.695 | —7.768 |
| 1 | 0 | 1 | —0.1506 | 0.1070 |
| 1 | 0 | 2 | 0 | 0 |
| 1 | 0 | 3 | 0 | 0 |
| 1 | 1 | 0 | —10.42 | 30.58 |
| 1 | 1 | 1 | -0.7201 | 1.786 |
| 1 | 1 | 2 | 0.05011 | 0 |
| 1 | 1 | 3 | 0 | 0 |
| 1 | 2 | 0 | 6.919 | 17.92 |
| 1 | 2 | 1 | 0 | 0 |
| 1 | 2 | 2 | 0 | —2.915 |
| 1 | 2 | 3 | 0 | 0 |
| 2 | 0 | 0 | -8.574 | 6.841 |
| 2 | 0 | 1 | 0.1546 | 0 |
| 2 | 0 | 2 | 0 | 0 |
| 2 | 0 | 3 | 0 | 0 |
| 2 | 1 | 0 | 0 | 14.19 |
| 2 | 1 | 1 | 4.070 | 0 |
| 2 | 1 | 2 | —0.1894 | 1.619 |

(continued)

| i | j | k | $a_{ijk}$ | $b_{ijk}$ |
|---|---|---|-----------|-----------|
| 2 | 1 | 3 | 0 | 0 |
| 2 | 2 | 0 | 0 | 0 |
| 2 | 2 | 1 | 2.453 | 21.82 |
| 2 | 2 | 2 | -0.2710 | 0 |
| 2 | 2 | 3 | $7.500 \times 10^{-3}$ | |

and wherein the variables are defined as follows:

$f_{cs}$ - feed split ratio,
$p_{col}$ - column top pressure,
$f_{b.c}$ - decision variable C,
$T_s$ - storage temperature (of final product),
$c_{CO2}$ — carbon dioxide concentration in feed,
$c_{NH3}$ — ammonia concentration in feed,
i,j,k - summation indices also used as exponent.

In order to obtain a high separation efficiency, it is suggested in a further development of the idea of the present invention that the ammonia stripper column comprises one or more beds being constituted by one or more random packings, one or more beds being constituted by one or more structured packings or by one or more trays. Particular good results are obtained, when the ammonia stripper column comprises at least two beds comprising one or more random packings, at least two beds comprising one or more structured packings or at least two trays, wherein the at least two beds or trays are arranged on top of each other, wherein the liquid carbon dioxide depleted stream is fed into the ammonia stripper column at a position between two adjacent beds of one or more random packings, between two adjacent beds of one or more structured packings or between two adjacent trays, and wherein in step d) the evaporated liquid purified wastewater stream is fed back into the ammonia stripper column below the at least two beds of one or more random packings, below the at least two beds of one or more structured packings or below the at least two trays. For instance, the ammonia stripper column comprises in the aforementioned embodiment exactly two such beds or trays being arranged on top of each other. As set out further above, it is preferred that no inert gas stream is fed into the ammonia stripper column.

It is preferred that the purified wastewater stream being withdrawn in step d) contains at most 1.000 ppm, more preferably at most 500 ppm, even more preferably at most 250 ppm, yet more preferably at most 150 ppm, still more preferably less than 50 ppm and most preferably less than 10 ppm of dissolved ammonia.

Moreover, it is preferred that the portion of the evaporated purified wastewater stream, which is fed back into the ammonia stripper column in step d), has a temperature of 100 to 120°C.

In accordance with a further particular preferred embodiment of the present invention, the gaseous ammonia rich stream, which is withdrawn in step d) from the ammonia stripper column, is led through a compressor, which is preferably a multi-stage turbofan compressor, so as to compress and heat the gaseous ammonia rich stream to a temperature of 110 to 130°C, wherein the compressed and heated gaseous ammonia rich stream is then led through a heat exchanger, in which it heats and evaporates the liquid purified wastewater stream to be evaporated in step d), whereupon the compressed and heated gaseous ammonia rich stream partially condenses, wherein the condensed portion thereof is separated and led optionally via a heat exchanger back into the ammonia stripper column, whereas the non-condensed portion thereof is fed in step e) as gaseous ammonia rich stream into the quencher column. The condensed portion of the ammonia rich stream may be led through a heat exchanger for heating the second portion of the of the wastewater stream as described above.

In the aforementioned preferred embodiment, according to which the ammonia stripper column comprises at least two beds comprising one or more random packings, at least two beds comprising one or more structured packings or at least two trays, it is particularly preferred that the condensed portion of the compressed and heated gaseous ammonia rich stream is led back into the ammonia stripper column at a position above the at least two beds of one or more random packings, at least two beds of one or more structured packings or at least two trays.

In view of a good separation efficiency, it is further preferred that the quencher column comprises at least two beds comprising one or more random packings, at least two beds comprising one or more structured packings or at least two trays, wherein the at least two beds or trays are arranged on top of each other, wherein the water is fed into the quencher column at a position above the uppermost of the at least two beds of one or more random packings, above the uppermost of the at least two beds of one or more structured packings or above the uppermost of the two trays and the gaseous ammonia rich stream is fed into the quencher column at a position below the lowermost of the at least two beds of one or more random packings, below the lowermost of the at least two beds of one or more structured packings or below the lowermost of the at least two trays.

In a further development of the idea of the present invention, it is proposed that a portion of the concentrated aqueous ammonia solution being withdrawn from the bottom of the quencher column in step e) is led back into the quencher column and preferably at a position between two adjacent beds of one or more random packings, between two adjacent beds of one or more structured packings or between two adjacent trays.

Preferably, the concentrated aqueous ammonia solution being withdrawn from the quencher column in step e) contains at least 10% by weight, more preferably at least 15% by weight, still more preferably at least 20% by weight and most preferably at least 25% by weight of dissolved ammonia. The vent gas stream being withdrawn as overhead fraction form the quencher column contains less than 10 ppm ammonia.

In accordance with another aspect, the present invention relates to a plant for treating an ammonia and carbon dioxide containing wastewater stream so as to produce a concentrated aqueous ammonia solution containing at least 5% by weight of dissolved ammonia and at most 20% by weight of dissolved carbon dioxide and a purified wastewater stream containing at most 1.000 ppm dissolved ammonia, wherein the plant comprises:

i) a carbon dioxide degasser column comprising at least one bed of one or more random packings, at least one bed of one or more structured packings or at least one tray, a first feed inlet line entering the carbon dioxide degasser column at a position above at least one bed of one or more random packings, above at least one bed of one or more structured packings or above at least one tray, a second inlet line for feed or a mixture of feed and a liquid carbon dioxide depleted stream entering the carbon dioxide degasser column at a position below at least one bed of one or more random packings, below at least one bed of one or more structured packings or below at least one tray, wherein the bed of one or more random packings, the bed of one or more structured packings or the tray above which the first feed inlet line enters the carbon dioxide degasser column is the same as or located above the bed of one or more random packings, the bed of one or more structured packings or the tray below which the second inlet line for feed or a mixture of feed and a liquid carbon dioxide depleted stream enters the carbon dioxide degasser column, an overheads outlet line for a gaseous carbon dioxide rich stream and a bottom outlet line for a liquid carbon dioxide depleted stream,

ii) an ammonia stripper column comprising an inlet line being connected with the bottom outlet line of the carbon dioxide degasser column, an overhead outlet line for a gaseous ammonia rich stream, a bottom outlet line for a purified wastewater stream and a return line being connected with the bottom outlet line, wherein the bottom outlet line and/or the return line leads through an evaporator, and

iii) a quencher column comprising an inlet line being directly or indirectly connected with the overhead outlet line of the ammonia stripper column, an inlet line for water and an outlet line for concentrated aqueous ammonia solution.

The plant may comprise a (central) feed line, which splits into the first feed inlet line and into the second inlet line for feed or a mixture of feed and a liquid carbon dioxide depleted stream. Alternatively, the (central) feed line splits into the first feed inlet line and into a second feed line, wherein the second feed line leads into the second inlet line for feed or a mixture of feed. In the last mentioned alternative, the second feed line preferably combines with a recycle line for liquid carbon dioxide depleted stream, thus forming the second inlet line for a mixture of feed, wherein the recycle line splits off from the bottom outlet line for liquid carbon dioxide depleted stream of the carbon dioxide degasser column.

The present invention is not particularly restricted concerning the number of beds comprising one or more random packings, the number of beds comprising one or more structured packings or the number of trays included in the carbon dioxide degasser column. For instance, the carbon dioxide degasser column may comprise one bed of one or more random packings, one bed of one or more structured packings or one tray, wherein the first portion of the wastewater stream is fed above and the second portion of the wastewater stream is fed below the bed of one or more random packings, the bed of one or more structured packings or the tray into the carbon dioxide degasser column. Suitable examples for structured packings are cross-channel structured packings.

In accordance with an alternative embodiment of the present invention, the carbon dioxide degasser column comprises two beds of one or more random packings, two beds of one or more structured packings or two trays on top of each other, wherein the first feed inlet line enters the carbon dioxide degasser column at a position above the upper bed of one or more random packings, above the upper bed of one or more structured packings or above the upper tray and the second inlet line for feed or a mixture of feed and a liquid carbon dioxide depleted stream enters the carbon dioxide degasser column at a position below the lower bed of one or more random packings, below the lower bed of one or more structured packings or below the lower tray.

In a further development of the idea of the present invention, it is suggested that the plant further comprises i) a heat exchanger, through which a) the second feed line or second inlet line and b) a condensate line being connected with the overhead outlet line for gaseous ammonia rich stream are led, and/or ii) a heat exchanger, through which c) the second feed line or the second inlet line and d) the bottom outlet line for the purified wastewater stream of the ammonia stripper column are led and/or iii) a heat exchanger, through which e) the second feed line or the second inlet line and f) the bottom outlet line for the liquid carbon dioxide depleted stream of the carbon dioxide degasser column are led.

Preferably, the plant comprises i) a heat exchanger, through which the second feed line and a condensate line being connected with the overhead outlet line for gaseous ammonia rich stream are led, and downstream thereof ii) a heat exchanger, through which the second feed line and the bottom outlet line for the purified wastewater stream of the ammonia stripper column are led.

Good results are in particular obtained, if the plant further comprises downstream of the heat exchanger ii) a iii) heat exchanger, through which the second feed line and the bottom outlet line for the liquid carbon dioxide depleted stream of the carbon dioxide degasser column are led.

The plant may further comprise, optionally downstream of one or more of the aforementioned heat exchangers, an evaporator comprising an inlet and outlet line for external heating medium as well as an inlet and outlet for the second inlet line for feed or a mixture of feed and a liquid carbon dioxide depleted stream.

In accordance with a further particularly preferred embodiment of the present invention, the ammonia stripper column comprises at least two beds of one or more random packings, at least two beds of one or more structured packings or at least two trays arranged on top of each other, wherein the inlet line being connected with the bottom outlet line of the carbon dioxide degasser column enters the ammonia stripper column at a position between two adjacent beds of one or more random packings, between two adjacent beds of one or more structured packings or between two adjacent trays, and wherein a return line enters the ammonia stripper column at a position below the at least two beds of one or more random packings, below the at least two beds of one or more structured packings or below the at least two trays and optionally another return line enters the ammonia stripper column at a position above the at least two beds of either random packing, structured packing or trays.

The plant may further comprise a compressor, which is preferably a multi-stage turbofan compressor, being connected with the overhead outlet line for the gaseous ammonia rich stream of the ammonia stripper column and an outlet line. Downstream of the compressor preferably a heat exchanger is arranged, to which the outlet line of the compressor and the bottom outlet line for a purified wastewater stream of the ammonia stripper column are led, wherein the evaporator is connected with the inlet line of the quencher column.

In a further development of the idea of the present invention, it is proposed that the aforementioned evaporator is also connected with a second line, which is preferably the return line to the ammonia stripper column. Preferably, the second line or return line, respectively, is connected with the ammonia stripper column at a position above the at least two beds of random packing and/or structured packing.

In accordance with yet a further particularly preferred embodiment of the present invention, the quencher column of the plant comprises at least two beds of one or more random packings, at least two beds of one or more structured packings or at least two trays arranged on top of each other, wherein the inlet line for water enters the quencher column at a position above the uppermost of the at least two beds of one or more random packings, of the at least two beds of one or more structured packings or of the at least two trays and the vapor inlet line being directly or indirectly connected with the overhead outlet line of the ammonia stripper column enters the quencher column at a position below the lowermost of the at least two beds of one or more random packings, below the lowermost of the at least two beds of one or more structured packings or below the lowermost of the at least two trays.

Preferably, the plant further comprises a return line, which is connected with the outlet line for concentrated aqueous ammonia solution of the quencher column and which leads back into the quencher column.

It is further preferred that the return line enters the quencher column at a position between two adjacent beds of one or more random packings, between two adjacent beds of one or more structured packings or between two adjacent trays.

Subsequently, the present invention is described by means of illustrative, but not limiting figures, in which:

Fig. 1    shows a schematic view of the plant in accordance with one exemplary embodiment of the present invention.

Fig. 2    shows a schematic view of the plant in accordance with another exemplary embodiment of the present invention.

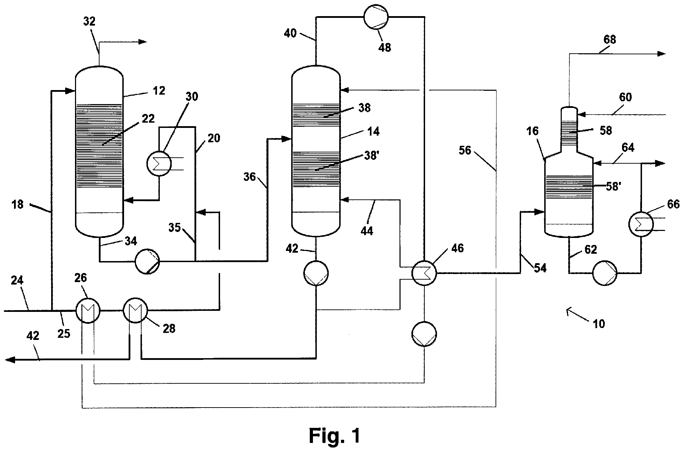

The plant 10 for treating an ammonia and carbon dioxide containing wastewater stream so as to produce a concentrated aqueous ammonia solution containing at least 5% by weight of dissolved ammonia and at most 20% by weight of dissolved carbon dioxide and a purified wastewater stream containing at most 1.000 ppm dissolved ammonia shown in fig. 1 comprises a carbon dioxide degasser column 12, an ammonia stripper column 14 and a quencher column 16. The carbon dioxide degasser column 12 comprises a first feed inlet line 18, a second feed inlet line 20 for a mixture of feed and a liquid carbon dioxide depleted stream and a bed 22 of structured packing, wherein the first feed inlet line 18 enters the carbon dioxide degasser column 12 at a position above the bed 22 of structured packing and the second feed inlet line 20 enters the carbon dioxide degasser column 12 at a position below the bed 22 of structured packing. The plant further comprises a central feed inlet line 24, which splits into the first feed inlet line 18 and into a second feed line 25, wherein the second feed line 25 leads into the second feed inlet line 20 for a mixture of feed and a liquid carbon dioxide depleted stream. More specifically, the second feed line 25 leads, seen from the central feed inlet line 24 in downstream direction, through a first heat exchanger 26 and through a second heat exchanger 28 and then leads into the second feed inlet line 20, which leads through an evaporator (reboiler) 30, so that the second portion of the feed in the second feed line 25 and the mixture of feed and liquid carbon dioxide depleted stream in the second feed inlet line 20 are heated and evaporated, before the evaporated mixture of feed and liquid carbon dioxide depleted stream enters the carbon dioxide degasser column 12. The carbon dioxide degasser column 12 further comprises an overheads outlet line 32 for a gaseous carbon dioxide rich stream and a bottom outlet line 34 for liquid carbon dioxide depleted stream. The bottom outlet line 34 for liquid carbon dioxide depleted stream splits into a recycle line 35 and into the inlet line 36 to the ammonia stripper column 14, wherein the recycle line 35 combines with the second feed line 25 to the second feed inlet line 20 for the mixture of feed and liquid carbon dioxide depleted stream.

The ammonia stripper column 14 comprises two beds 38, 38' of structured packing arranged on top of each other, wherein the inlet line 36 being connected with the bottom outlet line 34 of the carbon dioxide degasser column 12 enters the ammonia stripper column 14 at a position between the two adjacent beds 38, 38' of structured packing. The ammonia stripper column 14 further comprises an overhead outlet line 40 for gaseous ammonia rich stream, a bottom outlet line 42 for purified wastewater stream and a return line 44 being connected with the bottom outlet line 42 for withdrawing a portion of the purified wastewater stream and returning it into the ammonia stripper column 14. The return line 44 splits from the bottom outlet line 42 and leads through an evaporator (reboiler) 46 and then enters the ammonia stripper column 14 at a position below the lower bed 38' of structured packing. The bottom outlet line 42 leads through the heat exchanger 28 and then out of the plant 10. The plant 10 further comprises a compressor 48, which is preferably a multi-stage turbofan compressor, which is connected with the overhead outlet line 40 for the gaseous ammonia rich stream of the ammonia stripper column 14 and further with a line 50, which connects the compressor 48 with the evaporator (reboiler) 46. The evaporator (reboiler) 46 has two outlets, one of which being connected to a vapor inlet line 54 of the quencher column 16 and the other one being connected to a condensate return line 56 to the ammonia stripper column 14, which leads through the heat exchanger 26 and which enters the ammonia stripper column 14 at a position above the upper bed 38 of structured packing.

Also the quencher column 16 comprises two beds 58, 58' of structured packing arranged on top of each other. Furthermore, the quencher column 16 comprises an inlet line 60 for water, which enters the quencher column 16 at a position above the uppermost of the two beds 58 of structured packing, whereas the inlet line 54 being indirectly connected with the overhead outlet line 40 of the ammonia stripper column 14 enters the quencher column 16 at a position below the lowermost of the two beds 58' of structured packing. In addition, the quencher column 16 comprises an outlet line 62 for concentrated aqueous ammonia solution leading through heat exchanger 66. Downstream of the heat exchanger 66, line 62 splits into leading back into the quencher column 16 at a position between the two adjacent beds 58, 58' of structured packing and a line to outside battery limits, in which the product ammonia solution is obtained. Finally, the quencher column 16 comprises an outlet line 68 for withdrawing vent gas from the quencher column 16.

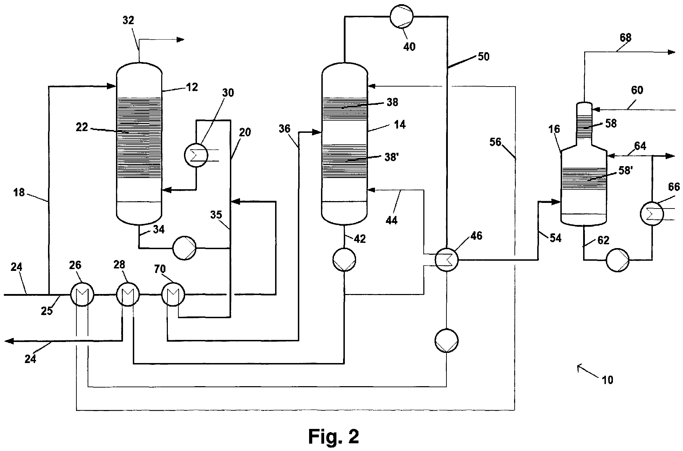

The plant 10 for treating an ammonia and carbon dioxide containing wastewater stream shown in figure 2 is the same as that shown in figure 1 except that it additionally comprises a further heat exchanger 70, through which the inlet line 36 of the ammonia stripper column 14 being connected with the bottom outlet line 34 of the carbon dioxide degasser column 12 and through which the second feed line 25 lead in order to heat the second portion of the feed led through the second feed line 25.

During the operation of the plants 10 shown in figures 1 and 2, an ammonia and carbon dioxide containing wastewater stream, such as filtered fermentation broth or an anaerobically digested cattle manure effluent, is led as feed into the plant via the central feed inlet line 24. The feed is split into a first portion of the wastewater stream, which is introduced via the first feed inlet line 18 into the carbon dioxide degasser column 12 above the structured packing 22, and into a second portion of the wastewater stream. In accordance with the present invention, the mass flow ratio of the first portion of the wastewater stream is adjusted so as to be 0.01 to 0.6 based on the total wastewater stream fed into the carbon dioxide degasser column.

The second portion of the wastewater stream is fed via the second feed line 25 through heat exchangers 26, 28 in the embodiment of figure 1 and through evaporators 26, 28, 70 in the embodiment of figure 2, in order to heat the second portion of the wastewater stream. While the second portion of the wastewater stream is heated in heat exchanger 26 by the condensed liquid stream withdrawn from the ammonia stripper column 14 as overheads fraction via lines 40, 50, 56, the wastewater stream is heated in heat exchanger 28 by the purified wastewater stream withdrawn as bottom fraction from the ammonia stripper column 14 via line 42 and the wastewater stream is heated in heat exchanger 70 of the embodiment of figure 2 by a portion of the liquid carbon dioxide depleted stream being withdrawn as bottom fraction from the carbon dioxide degasser column 12 via lines 34, 36. Downstream thereof, the heated second portion of the wastewater stream is combined at the entrance of line 20 with a portion of the liquid carbon dioxide depleted stream being withdrawn as bottom fraction from the carbon dioxide degasser column 12 via lines 34, 35, wherein the so obtained mixture is evaporated in the evaporator (reboiler) 30 by means of an external heating medium. The evaporated mixture of the second portion of the wastewater stream with the portion of the carbon dioxide depleted stream is introduced into the carbon dioxide degasser column 12 below the structured packing 22 and rises in the carbon dioxide degasser column 12 upwards, whereas the colder first portion of the wastewater stream being fed to the top of the carbon dioxide degasser column 12 trickles in the carbon dioxide degasser column 12 downwards. On account of the heat and mass transfer between the two phases being increased by the structured packing 22, enriched pure gaseous carbon dioxide with water and a low fraction of ammonia is separated from the liquid phase and is withdrawn as overheads fraction through line 32 from the carbon dioxide degasser column 12. The liquid fraction, in turn, is depleted from carbon dioxide and the liquid carbon dioxide depleted stream is withdrawn from the carbon dioxide degasser column 12 as bottom fraction through line 34.

The liquid carbon dioxide depleted stream is led in the embodiment of figure 1 through line 36 directly into the ammonia stripper column 14 and in the embodiment of figure 2 first through the heat exchanger 70 and then through line 36 into the ammonia stripper column 14. A portion of the bottoms fraction being withdrawn from the ammonia stripper column 14 through line 42 is evaporated in the heat exchanger (reboiler) 46 and fed back through the return line 44 into the ammonia stripper column 14. On account of the heat and mass transfer between the two phases being increased by the structured packings 38, 38' enriched gaseous ammonia together with the remaining carbon dioxide and some water is separated from the liquid phase and is withdrawn as overheads fraction through line 40 from the ammonia stripper column 14. The purified liquid wastewater stream, in turn, is depleted from ammonia and carbon dioxide and is withdrawn from the ammonia stripper column 14 as bottom fraction through line 42. While the purified liquid wastewater stream is withdrawn from the plant 10, the gaseous ammonia rich stream is sent through lines 40, 50, 56 after having been led through the compressor 48, sent through line 50 and through the heat exchanger (reboiler) 46, from which the non-condensed fraction is sent vial line 54 into the bottom part of the quencher column 16. The gaseous ammonia rich stream is contacted in the quencher column 16 with the liquid water having been introduced into the upper part of the quencher column 16 through line 60 and with the concentrated aqueous ammonia solution being withdrawn from the ammonia stripper column 14 via line 62 and being partly returned into the section between the two beds 58, 58' of the quencher column 16 through line 64, whereas the other part is drawn as product ammonia solution to outside battery limits. On account of the heat and mass transfer between the vapor phase and the liquid phase being increased by the structured packings 58, 58' the ammonia and a fraction of the residual carbon dioxide dissolve in the water forming the concentrated aqueous ammonia solution containing at least 5% by weight of dissolved ammonia and at most 20% by weight of dissolved carbon dioxide, which is withdrawn from the quencher column 16 as bottom fraction, whereas the remaining gases including gaseous carbon dioxide is withdrawn as overheads fraction from the quencher column 16 through the outlet line 68.

**Reference numerals**

|    |    |
|----|----|
| 10 | Plant |
| 12 | Carbon dioxide degasser column |
| 14 | Ammonia stripper column |
| 16 | Quencher column |
| 18 | First feed inlet line into the carbon dioxide degasser column |
| 20 | Second feed inlet line into the carbon dioxide degasser column |
| 22 | Bed of structured packing of carbon dioxide degasser column |
| 24 | Central feed inlet line |
| 25 | Second feed line |
| 26 | Heat exchanger |
| 28 | Heat exchanger |
| 30 | Evaporator (reboiler) of the carbon dioxide degasser column |
| 32 | Overheads outlet line of the carbon dioxide degasser column |
| 34 | Bottom outlet line of the carbon dioxide degasser column |
| 35 | Recycle line |
| 36 | Inlet line to ammonia stripper column |
| 38, 38' | Bed of structured packing of carbon dioxide ammonia stripper column |
| 40 | Overhead outlet line of the ammonia stripper column |
| 42 | Bottom outlet line of the ammonia stripper column |
| 44 | Return line of the ammonia stripper column |

| | |
|---|---|
| 46 | Evaporator (reboiler) of the ammonia stripper column |
| 48 | Compressor |
| 50 | Connection line |
| 54 | Inlet line to quencher column |
| 56 | Return line to ammonia stripper column |
| 58, 58' | Bed of structured packing of quencher column |
| 60 | Water inlet line |
| 62 | Outlet line for concentrated aqueous ammonia solution |
| 64 | Return line to quencher column |
| 66 | Heat exchanger |
| 68 | Outlet line |
| 70 | Heat exchanger |

**Claims**

1. A process of treating an ammonia and carbon dioxide containing wastewater stream so as to produce a concentrated aqueous ammonia solution containing at least 5% by weight of dissolved ammonia and at most 20% by weight of dissolved carbon dioxide and a purified wastewater stream containing at most 1.000 ppm dissolved ammonia, wherein the process comprises the following steps:

   a) feeding the wastewater stream into a carbon dioxide degasser column (12) comprising at least one bed (22) of one or more random packings, at least one bed (22) of one or more structured packings or at least one tray, wherein i) a first portion of the wastewater stream is fed at a position above at least one bed (22) of one or more random packings, at least one bed (22) of one or more structured packings or at least one tray and ii) a second portion of the wastewater stream having a higher temperature than the first portion and/or a mixture of a second portion of the wastewater stream with a portion of a liquid carbon dioxide depleted stream being withdrawn as bottom fraction from the carbon dioxide degasser column (12) having a higher temperature than the first portion is fed at a position below at least one bed (22) of one or more random packings, at least one bed (22) of one or more structured packings or at least one tray into the carbon dioxide degasser column (12), wherein the bed (22) of one or more random packings, the bed (22) of one or more structured packings or the tray above which the first portion of the wastewater stream is fed is the same as or located above the bed (22) of one or more random packings, the bed (22) of one or more structured packings or the tray below which the second portion of the wastewater stream and/or the mixture of a second portion of the wastewater stream with a portion of a liquid carbon dioxide depleted stream is fed, wherein the mass flow ratio of the first portion of the wastewater stream to the total wastewater stream fed into the carbon dioxide degasser column is 0.01 to 0.6,
   b) withdrawing a gaseous carbon dioxide rich stream containing less than 10% by weight of the ammonia contained in the wastewater stream as overhead fraction and the liquid carbon dioxide depleted stream as bottom fraction from the carbon dioxide degasser column (12),
   c) feeding the liquid carbon dioxide depleted stream into an ammonia stripper column (14),
   d) withdrawing a gaseous ammonia rich stream as overhead fraction and the purified wastewater stream containing at most 1.000 ppm dissolved ammonia as bottom fraction from the ammonia stripper column (14), wherein at least a portion of the liquid purified wastewater stream withdrawn from the ammonia stripper column (14) is evaporated, from which all or a portion is fed back into the ammonia stripper column (14),
   e) feeding the gaseous ammonia rich stream and separately therefrom water into a quencher column (16), withdrawing a gaseous vent gas stream as overhead fraction and withdrawing concentrated aqueous ammonia solution containing at least 5% by weight of dissolved ammonia and at most 20% by weight of dissolved carbon dioxide as bottom fraction from the quencher column (16).

2. The process in accordance with claim 1, wherein the produced concentrated aqueous ammonia solution does not form any precipitate and in particular no ammonium carbonate precipitate, when stored for at least 1 day at a temperature of 10°C.

3. The process in accordance with claim 1 or 2, wherein in step e):

   - no inert gas is fed in addition to the gaseous ammonia rich stream and the water into the quencher column (16) and preferably in the whole process no inert gas is fed into any of the columns (12, 14, 16) and/or
   - no base and/or no acid is added to the wastewater stream before or during it is fed into the carbon dioxide degasser column (12) or to the liquid carbon dioxide depleted stream before or during it is fed into the ammonia stripper column (14) and preferably in the whole process no base and/or no acid is fed into any of the streams, and/or

- the purified wastewater stream withdrawn in step d) from the ammonia stripper column (14) is neither completely nor partially recycled to the carbon dioxide degasser column (12) used in step a).

4. The process in accordance with any of the preceding claims, wherein:

   - the carbon dioxide degasser column (12) comprises one bed (22) of one or more random packings, one bed (22) of one or more structured packings or one tray, wherein the first portion of the wastewater stream is fed above and the second portion of the wastewater stream is fed below the bed (22) of one or more random packings, the bed (22) of one or more structured packings or the tray into the carbon dioxide degasser column (12), and/or
   - the carbon dioxide degasser column comprises two beds (22) of one or more random packings, two beds (22) of one or more structured packings or two trays on top of each other, wherein the first portion of the wastewater stream is fed at a position above the uppermost and the second portion of the wastewater stream is fed at a position below the lowermost bed (22) of random packing, lowermost bed (22) of structured packing or lowermost tray into the carbon dioxide degasser column (12).

5. The process in accordance with any of the preceding claims, wherein i) the second portion of the wastewater stream is heated in a heat exchanger (26), before being fed into the carbon dioxide degasser column (12), wherein a water rich condensate stream obtained from the gaseous ammonia rich stream withdrawn in step d) by partial condensation is used in the heat exchanger (26) as heating medium, and/or ii) wherein the second portion of the wastewater stream is heated in a heat exchanger (28), before being fed into the carbon dioxide degasser column (12), wherein the purified wastewater stream withdrawn in step d) is used in the heat exchanger (28) as heating medium, and/or iii) wherein the second portion of the wastewater stream is heated in a heat exchanger (70), before being fed into the carbon dioxide degasser column (12), wherein the liquid carbon dioxide depleted stream or a portion of the liquid carbon dioxide depleted stream withdrawn in step b) is used in the heat exchanger (70) as heating medium.

6. The process in accordance with any of the preceding claims, wherein the second portion of the wastewater stream or the mixture of the second portion of the wastewater stream with a portion of a liquid carbon dioxide depleted stream being withdrawn as bottom fraction from the carbon dioxide degasser column is, optionally after having heated in one or more heat exchangers (26, 28, 70), heated in an evaporator with an external heating medium, before the heated second portion of the wastewater stream or mixture of a second portion of the wastewater stream with a portion of a liquid carbon dioxide depleted stream being withdrawn as bottom fraction from the carbon dioxide degasser column is fed into the carbon dioxide degasser column (12).

7. The process in accordance with any of claims 1 to 5, wherein a portion of the liquid carbon dioxide depleted stream being withdrawn as bottom fraction from the carbon dioxide degasser column (12) is mixed with the second portion of the wastewater stream, before the so obtained mixture is fed into the carbon dioxide degasser column (12).

8. The process in accordance with any of the preceding claims, wherein the gaseous carbon dioxide rich stream being withdrawing in step b) contains less than 5% by weight, preferably less than 1% by weight and most preferably less than 0.1% by weight of the ammonia contained in the wastewater stream.

9. The process in accordance with any of the preceding claims, wherein the liquid carbon dioxide depleted stream being withdrawn in step b) contains less than 0.5% by weight of dissolved carbon dioxide and 0 to 2% by weight of dissolved ammonia and has a temperature of 100 to 130°C.

10. The process in accordance with any of the preceding claims, wherein the ammonia stripper column (14) comprises at least two beds (38, 38') of one or more random packings, at least two beds (38, 38') of one or more structured packings or at least two trays arranged on top of each other, wherein the liquid carbon dioxide depleted stream is fed into the ammonia stripper column (14) at a position between two adjacent beds (38, 38') of one or more random packings, between two adjacent beds (38, 38') of one or more structured packings or between two adjacent trays, and wherein the evaporated liquid purified wastewater stream is fed back into the ammonia stripper column below the at least two beds (38, 38') of one or more random packings, below the at least two beds (38, 38') of one or more structured packings or below the at least two trays.

**11.** The process in accordance with any of the preceding claims, wherein the purified wastewater stream being withdrawn in step d) contains at most 500 ppm, preferably at most 250 ppm, yet more preferably at most 150 ppm and most preferably less than 50 ppm of dissolved ammonia.

**12.** A plant (10) for treating an ammonia and carbon dioxide containing wastewater stream so as to produce a concentrated aqueous ammonia solution containing at least 5% by weight of dissolved ammonia and at most 20% by weight of dissolved carbon dioxide and a purified wastewater stream containing at most 1.000 ppm dissolved ammonia, wherein the plant (10) comprises:

    i) a carbon dioxide degasser column (12) comprising at least one bed (22) of one or more random packings, at least one bed (22) of one or more structured packings or at least one tray, a first feed inlet line (18) entering the carbon dioxide degasser column (12) at a position above at least one bed (22) of one or more random packings, at least one bed (22) of one or more structured packings or at least one tray, a second inlet line (20) for feed or a mixture of feed and a liquid carbon dioxide depleted stream entering the carbon dioxide degasser column (12) at a position below at least one bed (22) of one or more random packings, below at least one bed (22) of one or more structured packings or below at least one tray, wherein the bed (22) of one or more random packings, the bed (22) of one or more structured packings or the tray above which the first feed inlet line (18) enters the carbon dioxide degasser column (12) is the same as or located above the bed (22) of one or more random packings, the bed (22) of one or more structured packings or the tray below which the second inlet line (20) for feed or a mixture of feed and a liquid carbon dioxide depleted stream enters the carbon dioxide degasser column (12), an overheads outlet line (32) for a gaseous carbon dioxide rich stream and a bottom outlet line (34) for a liquid carbon dioxide depleted stream,

    ii) an ammonia stripper column (14) comprising an inlet line (36) being connected with the bottom outlet line (34) of the carbon dioxide degasser column (12), an overhead outlet line (40) for a gaseous ammonia rich stream, a bottom outlet line (42) for a purified wastewater stream and a return line (44) being connected with the bottom outlet line (42), wherein the bottom outlet line (42) and/or the return line (44) leads through an evaporator (46), and

    iii) a quencher column (16) comprising an inlet line (54) being directly or indirectly connected with the overhead outlet line (40) of the ammonia stripper column (14), an inlet line (60) for water and an outlet line (62) for concentrated aqueous ammonia solution.

**13.** The plant (10) in accordance with claim 12, further comprising i) a heat exchanger (26), through which a) the second feed line (25) or second inlet line (20) and b) a line (56) being connected with the overhead outlet line (40) for gaseous ammonia rich stream are led, and/or ii) a heat exchanger (28), through which c) the second feed line (25) or the second inlet line (20) and d) the bottom outlet line (42) for the purified wastewater stream of the ammonia stripper column (14) are led and/or iii) a heat exchanger (70), through which e) the second feed line (25) or the second inlet line (20) and f) the bottom outlet line (34) for the liquid carbon dioxide depleted stream of the carbon dioxide degasser column (12) are led.

**14.** The plant (10) in accordance with claim 12 or 13, wherein the ammonia stripper column (14) comprises at least two beds (38, 38') of one or more random packings, at least two beds (38, 38') of one or more structured packings or at least two trays arranged on top of each other, wherein the inlet line (36) being connected with the bottom outlet line (34) of the carbon dioxide degasser column (16) enters the ammonia stripper column (14) at a position between two adjacent beds (38, 38') of one or more random packings, between two adjacent beds (38, 38') of one or more structured packings or between two adjacent trays, and wherein the return line (44) enters the ammonia stripper column (14) at a position below the at least two beds (38, 38') of one or more random packings, below the at least two beds (38, 38') of one or more structured packings or below the at least two trays.

**15.** The plant (10) in accordance with any of claims 12 to 14, wherein the quencher column (16) comprises at least two beds (58, 58') of one or more random packings, at least two beds (58, 58') of one or more structured packings or at least two trays arranged on top of each other, wherein the inlet line (60) for water enters the quencher column (16) at a position above the uppermost of the at least two beds (58, 58') of one or more random packings, above the uppermost of the at least two beds (58, 58') of one or more structured packings or above the uppermost of the at least two trays and the inlet line (54) being directly or indirectly connected with the overhead outlet line (40) of the ammonia stripper column (14) enters the quencher column (16) at a position below the lowermost of the at least two beds (58, 58') of one or more random packings, below the lowermost of the at least two beds (58, 58') of one or more structured packings or below the lowermost of the at least two trays.

Fig. 1

EP 4 140 566 A1

Fig. 2

Europäisches Patentamt

European Patent Office

Office européen des brevets

# EUROPEAN SEARCH REPORT

**Application Number**

**EP 21 19 4125**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 42 39 637 C1 (PREUSSAG NOELL WASSERTECH [DE]) 28 April 1994 (1994-04-28) <br> * figures 1,2 * <br> * column 3, line 49 – column 4, line 54 * <br> ----- | 1-15 | INV. <br> B01D53/58 <br> C02F1/20 <br><br> ADD. <br> C02F101/16 <br> C02F103/30 <br> C02F11/04 |

**TECHNICAL FIELDS SEARCHED (IPC)**

B01D
C02F

The present search report has been drawn up for all claims

| Place of search | Date of completion of the search | Examiner |
|---|---|---|
| The Hague | 9 February 2022 | Châtellier, Xavier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 21 19 4125**

This annex lists the patent family members relating to the patent documents cited in the above-mentioned European search report.
The members are as contained in the European Patent Office EDP file on
The European Patent Office is in no way liable for these particulars which are merely given for the purpose of information.

**09-02-2022**

| Patent document cited in search report | Publication date | Patent family member(s) | Publication date |
|---|---|---|---|
| DE 4239637 C1 | 28-04-1994 | NONE | |

EPO FORM P0459